# EUROPÄISCHE PATENTSCHRIFT

(11) **EP 2 846 108 B1**
(45) Veröffentlichungstag und Bekanntmachung des Hinweises auf die Patenterteilung: **07.12.2016**
(21) Anmeldenummer: 14183703.9
(22) Anmeldetag: 05.09.2014
(51) Int. Cl.: F24F 13/30, F24F 1/01, F24F 13/072

(54) **Deckenluftauslass**
Ceiling-type supply air outlet
Sortie d'air au plafond

(30) Priorität: 05.09.2013 DE 102013109702
(43) Veröffentlichungstag der Anmeldung: 11.03.2015
(73) Patentinhaber: Caverion Deutschland GmbH, 80992 München (DE)
(72) Erfinder: Makulla, Dipl.-Ing., Detlef, 52134 Herzogenrath (DE); Laudenberg, Rainer, 52152 Simmerath (DE)
(74) Vertreter: Bauer, Dirk

(56) Entgegenhaltungen:
- EP-A2- 1 130 331
- DE-A1-102006 062 082
- DE-U1- 20 204 972
- DE-U1-202006 000 106
- DE-U1-202008 003 864

## Beschreibung

Die vorliegende Erfindung betrifft ein Set, umfassend eine Decke eines zu belüftenden Raumes und mindestens einen Luftauslass zur Belüftung eines Raums, insbesondere Deckenauslasses, wobei sich der Luftauslass insbesondere zur Belüftung eines Laborraums eignet, der Luftauslass umfassend ein Gehäuse, das von mindestens einem Bodenteil, mindestens einem Deckenteil sowie mindestens einem Seitenteil gebildet ist, die gemeinsam einen Innenraum des Gehäuses räumlich begrenzen, wobei das Gehäuse mindestens eine Lufteintrittsöffnung und mindestens eine Luftaustrittsöffnung umfasst, wobei mittels der Lufteintrittsöffnung Zuluft in den Luftauslass hinein und mittels der Luftaustrittsöffnung Luft aus dem Luftauslass heraus leitbar ist, wobei der Innenraum des Gehäuses mittels mindestens einer Trennwand in mindestens einen Lufteintrittsraum und mindestens einen Luftaustrittsraum unterteilt ist und wobei dem Lufteintrittsraum die Lufteintrittsöffnung und dem Luftaustrittsraum die Luftaustrittsöffnung zugeordnet sind und die Trennwand mindestens eine Öffnung aufweist, mittels derer eine strömungstechnische Verbindung zwischen dem Lufteintrittsraum und dem Luftaustrittsraum geschaffen ist, wobei der Luftauslass mindestens eine zweite Luftaustrittsöffnung besitzt, die in dem Lufteintrittsraum angeordnet ist und eine direkte strömungstechnische Verbindung zwischen dem Lufteintrittsraum und dem zu belüftenden Raum schafft, wobei
- die zweite Luftaustrittsöffnung in mindestens einem Seitenteil des Gehäuses angeordnet ist, sodass die in dem Lufteintrittsraum befindliche Zuluft - in einem vertikalen Querschnitt des Luftauslasses betrachtet - seitlich und vorzugsweise ungefähr horizontal aus dem Luftauslass heraus leitbar ist,
   und/oder
- die zweite Luftaustrittsöffnung in dem Bodenteil des Luftauslasses angeordnet ist, sodass die in dem Lufteintrittsraum befindliche Zuluft - in dem vertikalen Querschnitt des Luftauslasses betrachtet - an einer Unterseite des Luftauslasses, vorzugsweise in vertikale Richtung nach unten, aus dem Luftauslass heraus leitbar ist.

Der Luftaustrittsraum umfasst in diesem Zusammenhang einen Bereich des Luftauslasses, der "innerhalb" des Gehäuses liegt, das heißt innerhalb einer von den

Raumbegrenzungselementen des Luftauslasses (Bodenteil, Deckenteil, Seitenteil(e)) gebildeten Grenze. Diese Grenze kann beispielsweise von einem Lochblech gebildet sein, welches die Luftaustrittsöffnung beinhaltet und den Luftaustrittsraum räumlich begrenzt. Alternativ könnte der Luftaustrittsraum ebenso mittels einer "gedachten" Begrenzung abgeschlossen sein. Dies ist denkbar für den Fall, dass der Luftaustrittsraum geöffnet ist, das heißt ohne weitere begrenzende Bauteile explizit scharf von dem zu belüftenden Raum getrennt ist. In diesem Fall ist der Luftaustrittsraum weiterhin gegen den Luftaustrittsraum mittels der beschriebenen Trennwand begrenzt, gegen den zu belüftenden Raum jedoch gewissermaßen ohne eine bauliche Begrenzung. Dies ist so auffassbar, dass der Luftaustrittsraum zu dem zu belüftenden Raum hin vollständig mittels der Luftaustrittsöffnung begrenzt ist. Das Vorhandensein eines definierten Luftaustrittsraums im Sinne der vorstehenden Beschreibung des Luftauslasses ist hiervon jedoch unberührt.

### Stand der Technik

Luftauslässe der eingangs beschriebenen Art sind aus dem Stand der Technik bereits bekannt. Hierzu wird insbesondere auf die Schriften EP 1 422 481 A1, DE 20 2006 000 106 U1, DE 202 04 972 U1, DE 10 2006 062 082 A1, DE 20 2008 003 864 U1 und EP 1 130 331 A2 verwiesen.

Derartige Luftauslässe finden eine weit verbreitete Anwendung unter anderem in Laboratorien, deren Be- und Entlüftung in Abhängigkeit von den dort durchgeführten Arbeiten und Untersuchungen aus Sicherheitsgründen von besonderer Wichtigkeit sein kann. Zusätzlich zum reinen Luftaustausch kann ferner eine Konditionierung der Raumluft des jeweiligen Laborraums wichtig sein, insbesondere eine Regulierung der Raumtemperatur. Gleichwohl ist eine derartige Kontrolle der Raumluftbedingungen nicht immer gefordert und ist entsprechend bei der Projektierung entsprechender Neubauten nicht immer gewünscht.

In der Praxis kommt es über die Nutzungsdauer eines Gebäudes regelmäßig zu Umnutzungen. Dabei können gleichermaßen ganze Räume in ihrer Nutzung verändert werden oder lediglich eine Aufteilung von Arbeitsplätzen innerhalb eines Raumes variiert werden. Ein Arbeitsplatz mit einem Digestorium erfordert beispielsweise ein ganz anderes Strömungsprofil der einströmenden Zuluft, als beispielsweise ein Arbeitplatz, der lediglich mit einem Labortisch o. ä. ausgestattet ist. Insbesondere in Laborräumen kann letzteres bereits dazu führen, dass speziell an die Raumaufteilung angepasste Luftauslässe, die typischerweise in Form von Deckenauslässen vorhanden sind, der neuen Aufteilung nicht mehr genügen. Möglicherweise wird nach der Umnutzung des jeweiligen Laborraums nunmehr die Möglichkeit zur Regulierung der Raumtemperatur und/oder eine Änderung der vorhandenen Strömungsrichtung der Zuluft verlangt, die ursprünglich nicht vorgesehen war. Entsprechende Umbauten der raumlufttechnischen Komponenten sind in aller Regel aufwändig und limitieren folglich den Nutzer des Gebäudes in seiner Freiheit zur Umnutzung einzelner Räume. Hinzu kommt, dass bei der Planung eines Labors oftmals noch nicht bekannt ist, in welchen Bereichen eines jeweiligen Laborraums später welche Untersuchungen durchgeführt werden. Demzufolge ist in diesem Stadium oftmals noch nicht bekannt, welche Wärmelasten und welche Strömungsprofile in welchen Bereichen des Laborraums auftreten und abgeführt werden müssen. Oftmals ist es daher erforderlich, den Laborraum so auszustatten, dass praktisch jeder Bereich des Raumes für die höchstmögliche Belastung genutzt werden kann, was in der Praxis eine erhebliche Überdimensionierung der Ausstattung zur Folge hat. Alternativ können die vorhandenen Luftauslässe ausgetauscht werden. Letzteres ist - sofern überhaupt möglich - mit einem erheblichen Aufwand verbunden.

Ein derartiger Luftauslass geht beispielsweise aus dem Gebrauchsmuster DE 202 04 872 U1 hervor. Der Luftauslass, in Form eines Deckenluftauslasses, weist einen Eintrittsraum und einen Austrittsraum auf, die über Düsen miteinander in Verbindung stehen, so dass Primärluft aus dem Eintrittsraum in den Austrittsraum strömen kann. Die aus dem Deckenluftauslass strömende Zuluft wird von Primärluft und Raumluft gebildet, wobei die Raumluft durch einen an einer Unterseite des Deckenauslasses erzeugten Unterdruck angesaugt und durch ein Wärmetauschermodul geleitet wird. Bei dieser Art des Deckenluftauslasses kann lediglich ein bestimmtes Strömungsprofil erzeugt werden. Somit kann beispielsweise nicht ausgeschlossen werden, dass mittels dieses Luftauslasses eine unzureichende Zuluftmenge in den zu belüftenden Raum eingeleitet wird, wodurch aufgrund einer Abluftabsaugung ein unerwünschter Unterdruck in dem Raum entstehen kann. Dies ist insbesondere dann nachteilig, wenn der Deckenluftauslass in einem mit einem Digestorium versehenen Arbeitsbereich angebracht werden würde. Durch den entstehenden Unterdruck kann kontaminierte Zuluft aus dem Digestorium in den Raum gelangen. Hinzu kommt, dass das mittels des Deckenluftauslasses erzeugte Strömungsprofil derart ungünstig sein kann, dass in dem Bereich, in dem eine Öffnung des Digestoriums angeordnet ist, ein Unterdruck entsteht. Auch dies würde zu einem unerwünschten Ausspülleffekt von kontaminierter Zuluft aus dem Digestorium in den zu belüftenden Raum führen.

Die DE 10 2006 062 082 A1 offenbart ein Set, umfassend eine Decke eines zu belüftenden Raumes und einen Luftauslass gemäß dem Oberbegriff von Anspruch 1. Die in der DE 10 2006 062 082 A1 beschriebene Zuluftvorrichtung ist für Büroräume vorgesehen. Das Strömungsprofil dieser Zuluftvorrichtung ist somit derart eingestellt, dass ein angenehmes Raumklima für die in den Raum befindlichen Personen erzeugt wird. Mittels eines Reglers lässt sich beispielsweise die Menge der in den Raum einströmenden Zuluft regulieren. Über eine weitere, an der Oberseite der bekannten Vorrichtung befindlichen Ventilöffnung kann geregelt eine Teilmenge des Zuluftstroms unter Umgehung der Mischkammer aus dem Raum abgegeben werden. Dabei sind allerdings nur bestimmt Strömungsprofile vorgesehen, die sich nicht oder nur bedingt für den Laborbereich eignen würden. Ein flexibler Einsatz ist somit auch bei dieser Zuluftvorrichtung nicht gegeben.

### Aufgabe

Der vorliegenden Erfindung liegt folglich die Aufgabe zugrunde, einen Luftauslass hervorzubringen, der eine erhöhte Flexibilität im Hinblick auf eine Umnutzung des jeweils zu belüftenden Raumes ermöglicht.

### Lösung

Erfindungsgemäß wird ein Set vorgeschlagen mit den Merkmalen von Anspruch 1. Bevorzugte Ausführungsformen sind in den abhängigen Ansprüchen definiert. Die zugrunde liegende Aufgabe wird ausgehend von dem Luftauslass der eingangs beschriebenen Art erfindungsgemäß dadurch gelöst, dass der Luftauslass in seinem Einbauzustand, in dem dieser fest unter der Decke des zu belüftenden Raums installiert ist, mindestens eine unbestückte Aufnahme besitzt, die dafür geeignet ist, mindestens ein Wärmetauschermodul aufzunehmen.

Ein sich aus der erfindungsgemäßen Vorrichtung ergebender Vorteil besteht insbesondere darin, dass kein Austausch des gesamten Luftauslasses nötig ist, um einer eventuell der Umrüstung zugrunde liegenden Umnutzung des zu belüftenden Raumes gerecht zu werden. Stattdessen kann der erfindungsgemäße Luftauslass besonders einfach verstellt beziehungsweise umgerüstet werden. Dies ermöglicht dem Nutzer des jeweiligen Gebäudes eine hohe Flexibilität hinsichtlich der Nutzung der einzelnen Räume über die Lebensdauer des Gebäudes hinweg.

Mittels der mindestens einen zusätzlichen Luftaustrittsöffnung kann zumindest ein Teil der in den Luftauslass eintretenden Zuluft direkt an den zu belüftenden Raum abgegeben werden, ohne diese zuvor in den Luftaustrittsraum überzuleiten. Dies kann insbesondere in den Fällen wünschenswert sein, in denen unzureichend Zuluft über die erste Luftaustrittsöffnung geliefert werden kann. Mit Hilfe der zweiten Luftaustrittsöffnung kann mehr Zuluft in den Raum eingeleitet und somit ein Unterdruck in dem Raum vermieden werden, der durch einen ansonsten eventuell größeren Abluftvolumenstrom, beispielsweise bei dichter Digestorienanordnung, entstehen könnte. Hinzu kommt, dass die mindestens eine zusätzliche Luftaustrittsöffnung besonders gut dazu genutzt werden kann, eine turbulente Mischluftströmung zu erzeugen, wobei ein durch die Luftaustrittsöffnung austretender Volumenstrom vorteilhafterweise in seiner Größe und seiner Ausblassrichtung einstellbar ist.

Desweiteren bietet die seitliche Anordnung der zusätzlichen Öffnung den Vorteil, dass die seitlich ausströmende Zuluft oberhalb einer begrenzenden Wand, beispielsweise in Form eines Digestoriums, vorbeigeführt werden kann. Aufgrund des mittels der seitlichen Anordnung der zusätzlichen Öffnung wird ein Strömungsprofil der Zuluft erzeugt, welches eine ausreichende Belüftung des Raumes ermöglicht, ohne dass dabei ein Unterdruck an einer Öffnung des Digestoriums durch mit hoher Geschwindigkeit vorbeiströmender Luft beziehungsweise ein Ausspüleffekt erzeugt wird. Denn es ist unbedingt erforderlich, dass zu keinem Zeitpunkt Luft aus dem Digestorium in den Raum gelangt, da dieses zu einer Kontamination der Raumluft und somit zu einer Gefahr der darin befindlichen Personen führen könnte.

Eine besonders vorteilhafte Ausgestaltung der Erfindung sieht vor, dass die mindestens eine zusätzliche Luftaustrittsöffnung mit einer Lenkeinrichtung ausgestattet ist, um eine Abströmrichtung der durch die zusätzliche Luftaustrittsöffnung hindurchströmenden Luft beeinflussen zu können. Eine vollständige Verschließung der zusätzlichen Luftaustrittsöffnung kann dabei auch vorgesehen sein. Dadurch kann nicht nur ein lokaler Unterdruck an einer Öffnung des Digestoriums verhindert werden, sondern auch eine lokale stärke Strömung in einem anderen Bereich des Raumes erzeugt werden.

Wie zuvor erwähnt, ist ferner vorgesehen, dass das Wärmetauschermodul lösbar in der Aufnahme befestigbar ist, so dass im gewünschten Fall eine Umrüstung des Luftauslasses in dem Raum möglich ist. Der Einbau in sowie die Entnahme aus der Ausnahme sollte dabei zügig verlaufen können, weshalb die Verbindungen zwischen dem mindestens einen Wärmetauschermodul und dessen Aufnahme vorzugsweise werkzeuglos schließ- bzw. öffenbar ist. Dies wird beispielsweise dadurch ermöglicht, dass das Wärmetauschermodul mit der Aufnahme über Schnellverschlüsse (Steckverschlüsse, Clipverschlüsse oder dergleichen) verbunden ist. Dasselbe gilt für Anschlussleitungen, mittels denen das mindestens eine Wärmetauschermodul mit einem Wärmeträgermedium - typischerweise Wasser - versorgbar ist. Insbesondere ist es vorteilhaft, wenn die Anschlussleitungen von flexiblen Leitungen gebildet und mit selbstabsperrenden Kupplungen versehen sind.

Der flexible Einsatz eines Wärmetauschers birgt den wirtschaftlichen Vorteil, dass der Luftauslass nicht insgesamt demontiert werden muss, um seine Ausstattung und Funktionalität verändern zu können. In dem Einbauzustand des Luftauslasses ist die Aufnahme bereits fest in dem jeweiligen zu belüftenden Raum installiert, beispielsweise mit Raumbegrenzungselementen des jeweiligen Raumes verschraubt. Möglicherweise ist der Luftauslass in diesem Zustand bereits seit längerer Zeit in Benutzung.

Die unbestückte Aufnahme beschreibt eine Tasche, einen Rahmen oder dergleichen in dem Luftauslass, die von vornherein in selbigem angeordnet und dazu vorgesehen ist, möglicherweise im Nachgang zum Einbau des jeweiligen Luftauslasses, der vorerst keinen Wärmetauscher umfasst, ein Wärmetauschermodul aufzunehmen. Insoweit ist der erfindungsgemäße Luftauslass modular aufgebaut. Das heißt, dass der Luftauslass, der zunächst ohne ein Wärmetauschermodul ausgestattet ist, auf ein bestimmtes Wärmetauschermodul bzw. eine bestimmte Bauform von Wärmetauschermodulen abgestimmt ist. Ein solches Wärmetauschermodul kann dann bei Bedarf - insbesondere einer Umnutzung des jeweiligen Raumes - besonders einfach nachgerüstet werden kann. Der erfindungsgemäße Luftauslass ist aufgrund des modularen Aufbaus besonders gut geeignet, an wechselnde Betriebsbedingungen in dem jeweils zu belüftenden Raum angepasst zu werden, die im Zuge einer Umnutzung einzelner oder aller Räume in dem jeweiligen Gebäude entstehen können. Dies gilt gleichermaßen für eine Nachrüstung, die einen nachträglichen Einbau mindestens eines Wärmetauschermoduls umfasst, als auch eine Abrüstung, die einen nachträglichen Ausbau mindestens eines Wärmetauschermoduls umfasst. Letzteres kann beispielsweise sinnvoll sein, um bei einem Umzug eines Labors die Wärmetauschermodule "mitzunehmen". Somit könnte ein Labor von einem bisherigen Laborraum in einen benachbarten Raum umziehen, der bisher als Bürofläche genutzt wurde. In dem frei werdenden Laborraum könnte infolge des Umzugs das Vorhalten eine zuvor erforderliche Kühlleistung nicht länger notwendig sein, während der Nachbarraum fortan ebendiese Kühlleistung erfordert. Optimalerweise ist es in diesem Fall möglich, die Wärmetauschermodule der Luftauslässe aus dem Laborraum auszubauen und in die bislang unbestückten Luftauslässe in dem Nachbarraum einzusetzen. Der modulare Aufbau und die Verwendung besonders einfach montierbarer bzw. demontierbarer Verbindungen zwischen den Wärmetauschermodulen und den Luftauslässen ermöglichen es, einen solchen Umbau wirtschaftlich zu gestalten.

Vorteilhafterweise ist die Aufnahme für das mindestens eine Wärmetauschermodul in dem Luftaustrittsraum des Luftauslasses angeordnet. Die Anordnung ermöglicht es, das Wärmetauschermodul mit der Raumluft des zu belüftenden Raumes in Kontakt zu bringen und zur Temperierung derselben einzusetzen.

Dabei ist es ferner von Vorteil, wenn die durch die mindestens eine Öffnung der Trennwand in den Luftaustrittsraum strömende Zuluft an der Aufnahme vorbei führbar ist. Die Aufnahme selbst bildet - sofern kein Wärmetauschermodul eingesetzt ist - einen "freien Raum" in dem Luftaustrittsraum. Unter dem beschriebenen "Vorbeiführen" ist dabei zu verstehen, dass eine Abströmrichtung der durch die Öffnung hindurchtretenden Zuluft an diesem freien Raum entlang bzw. vorbei gerichtet ist. Dem liegt die Überlegung zugrunde, dass in einem Betriebszustand des Luftauslasses, in dem mindestens ein Wärmetauschermodul in dem Luftaustrittsraum eingebaut ist, mittels der durch die Öffnung strömenden Zuluft Raumluft aus dem zu belüftenden Raum induzierbar ist, wobei die Raumluft durch das Wärmetauschermodul strömt, das heißt durch einen von der Aufnahme eingefassten Bereich. Das Vorbeiführen der Zuluft bzw. der Primärluft an der Aufnahme ermöglicht demzufolge eine Induktion von Raumluft, die durch das Wärmetauschermodul strömen kann, sofern ein solches vorhanden ist.

Das erfindungsgemäße Set ist darüber hinaus dann besonders von Vorteil, wenn die erste Luftaustrittsöffnung, die in dem Luftaustrittsraum angeordnet ist, in dem Bodenteil des Gehäuses angeordnet ist, sodass in dem Luftaustrittsraum befindliche Luft - in einem vertikalen Querschnitt des Luftauslasses betrachtet - an einer Unterseite aus dem Luftauslass heraus leitbar ist. Diese Anordnung der Luftaustrittsöffnung ermöglicht eine senkrecht nach unten gerichtete Abströmung der dem Raum zugeführten Luft, was insbesondere im Heizbetrieb des Luftauslasses vorteilhaft ist. Eine möglicherweise gewünschte horizontale Abströmung der Luft aus dem Luftauslass heraus kann besonders einfach mittels einer Lenkeinrichtung erreicht werden, die in Strömungsrichtung der Luft betrachtet vor oder hinter der Luftaustrittsöffnung angeordnet sein kann und dazu geeignet ist, die Abströmrichtung der in den Raum geleiteten Luft zu beeinflussen. Eine derartige Lenkeinrichtung kann beispielsweise Lenkelemente aufweisen, die in sehr einfacher Weise von verschwenkbaren Leitblechen gebildet sein können.

Das erfindungsgemäße Set ist dann besonders von Vorteil, wenn die mindestens eine Öffnung in der Trennwand von einer Düse gebildet ist, wobei die Düse vorzugsweise mittels einer Absperreinrichtung versperrbar ist, sodass ein Überströmen der Zuluft ausgehend von dem Lufteintrittsraum in den Luftaustrittsraum verhindert ist. Eine solche Düse weist typischerweise einen vergleichsweise kleinen Strömungsquerschnitt im Bereich weniger cm² auf, wobei aufgrund des geringen Strömungsquerschnitts der Düse eine Beschleunigung der durch die Düse hindurchtretenden Zuluft bewirkt wird. Die erhöhte Abströmgeschwindigkeit der Zuluft von der Düse in den Luftaustrittsraum begünstigt eine Induktionswirkung, die in dem Luftaustrittsraum stattfindet.

Die besonders vorteilhafte Absperreinrichtung dient in diesem Zusammenhang dazu, eine einzelne, mehrere oder sämtliche vorhandenen Düsen zu versperren und auf diese Weise einen Volumenstrom von dem Lufteintritts- in den Luftaustrittsraum zu begrenzen oder sogar komplett auf Null zu reduzieren. Eine solche Einstellung kann unter verschiedenen Gesichtspunkten erwünscht sein. Beispielsweise könnte eine Induktion der Raumluft innerhalb des Luftaustrittsraums, die mittels der Düsen angetrieben wird, temporär unerwünscht sein. Durch eine Deaktivierung der Düsen in Form ihrer Absperrung, kann die Induktion der Raumluft dann unterbunden werden. Ebenso ist es denkbar, dass lediglich eine Abströmung von Luft aus der Luftaustrittsöffnung des Luftaustrittsraums lokal abgeschaltet werden soll. Hierzu ist beispielsweise die Situation vorstellbar, dass unterhalb des Luftauslasses in einem Teilbereich über die Länge des Luftauslasses betrachtet ein Arbeitsbereich eingerichtet ist, in dem eine direkte Einwirkung einer Luftströmung unerwünscht ist. Mittels der beschriebenen Versperrbarkeit der Düsen ist eine Abströmung von Luft durch die "untere" Luftaustrittsfläche sodann lokal deaktivierbar, sodass in dem Arbeitsbereich verminderte Luftströmungsgeschwindigkeiten auftreten, die beispielsweise die Behaglichkeit einer sich dort aufhaltenden Person nicht beeinträchtigen.

Ebenso ist denkbar, dass lokal erhöhte Strömungsgeschwindigkeiten infolge einer Luftzuführung durch den Luftaustrittsraum in einem Laborraum schädlich für die Sicherheit sind, beispielsweise im Zuge eines Betriebs eines Digestoriums, aus welchem in Gegenwart hoher äußerer Strömungsgeschwindigkeiten womöglich unbeabsichtigter Weise Schadstoffe "ausgespült" werden. Demzufolge können hohe Strömungsgeschwindigkeiten von dem Laborraum zugeführter Luft lokal im Bereich von Digestorien schädlich, abseits der Digestorien jedoch erwünscht sein. Mittels der mindestens einen zusätzlichen Luftaustrittsöffnung kann die Zuluft dann, wie zuvor beschrieben, oberhalb des Digestoriums entlang geleitet werden. Eine lokale Einstellbarkeit der Abströmung der Luft aus dem Luftaustrittsraum heraus ist demzufolge vorteilhaft.

Das erfindungsgemäße Set ist ferner dann besonders von Vorteil, wenn das Gehäuse mindestens ein Beleuchtungsmodul umfasst, das vorzugsweise in dem Innenraum des Gehäuses angeordnet und mit dem Bodenteil oder einem Seitenteil des Gebäudes verbunden ist, wobei das Gehäuse weiter vorzugsweise eine Breite von mindestens 1,30 m, vorzugsweise mindestens 1,40 m, aufweist. Die Integration mindestens eines Beleuchtungsmoduls in den Luftauslass führt zu zwei wesentlichen Vorteilen: Zum einen kann die Wärmelast, die aufgrund der Leuchten anfällt, direkt am Ort ihres Entstehens abgeführt werden. Zum anderen ermöglicht die Kombination der Luftzuführungs- und Beleuchtungsfunktion die Ausbildung einer besonders kompakten Einheit, die sehr schnell und kostengünstig dem jeweiligen Raum installiert werden kann. Auch hier ist ein modularer Aufbau denkbar, der eine Nach- oder Umrüstbarkeit des erfindungsgemäßen Luftauslasses mit mindestens einem Beleuchtungsmodul ermöglicht. Die beschriebene vorteilhafte Breite des Luftauslasses trägt einem typischen Abstand benachbarter Arbeitsreihen in einem Laborraum Rechnung.

Ferner ist ein Set mit einem solchen Luftauslass besonders vorteilhaft, der über eine Regeleinrichtung verfügt, mittels derer ein Volumenstrom der durch die Lufteintrittsöffnung in den Lufteintrittsraum strömenden Zuluft regulierbar ist, wobei die Regeleinrichtung vorzugsweise eine Regelklappe sowie eine Antriebseinrichtung umfasst, wobei vorzugsweise mittels der Regelklappe, die mittels der Antriebseinrichtung bewegbar ist, ein freier Strömungsquerschnitt eines mit der Lufteintrittsöffnung verbundenen Zuluftkanals zwischen einer Offenstellung, in der der Strömungsquerschnitt vollständig freigegeben ist, und einer Schließstellung, in der der Strömungsquerschnitt vollständig versperrt ist, vorzugsweise stufenlos, einstellbar ist. Eine solche Regeleinrichtung ermöglicht eine dezentrale Regulierung der dem jeweiligen Raum zugeführten Luft. Eine Veränderung der Einstellung der Regelklappe hat auf einen eventuell vorhandenen Nachbarraum oder sonstige Räume, die gleichermaßen an ein zentrales Zuluftsystem angeschlossen sind, keinerlei Auswirkung.

Eine Regeleinrichtung der beschriebenen Art ist insbesondere in einem Laborraum besonders von Vorteil, in dem ein oder mehrere Digestorien zum Einsatz kommen. Dies hängt damit zusammen, dass ein Abluftvolumenstrom, der mittels der Digestorien aus dem jeweiligen Laborraum entnommen wird, mit einer fortwährenden Veränderung eines Öffnungsquerschnitts der Digestorien stark schwanken kann. Um schwankende Druckverhältnisse in dem Laborraum zu vermeiden, die womöglich dazu führen könnten, dass Schadstoffe aus dem Digestorium in den umliegenden Laborraum austreten, ist es wichtig, dass ein durch den oder die Luftauslässe zugeführter Luftvolumenstrom mengenmäßig dem aus dem Laborraum abgeführten Abluftvolumenstrom im Wesentlichen entspricht. Insoweit kann eine regeltechnische Koppelung der Regeleinrichtung an eine entsprechende Messeinrichtung sinnvoll sein, die fortwährend die Menge der mittels der Digestorien oder auf sonstige Weise abgeführten Abluft erfasst.

In einer weiteren vorteilhaften Ausgestaltung des erfindungsgemäßen Sets ist besagte Regeleinrichtung in dem Innenraum des Gehäuses angeordnet ist, wobei sich vorzugsweise der Zuluftkanal ausgehend von der Lufteintrittsöffnung in Richtung des Innenraums des Gehäuses erstreckt. Diese Bauweise ermöglicht eine niedrige Bauhöhe des gesamten Luftauslasses, der dadurch sehr kompakt ausführbar ist.

Ferner ist es besonders von Vorteil, wenn der Luftauslass eine lang gestreckte Form aufweist, wobei der Luftauslass in dessen Einbauzustand eine Länge von mindestens 5,0 m, vorzugsweise mindestens 5,5 m, weiter vorzugsweise mindestens 6,0 m, aufweist und weiter vorzugsweise in der Trennwand eine Mehrzahl von Öffnungen verteilt über die Länge des Luftauslasses angeordnet ist, wobei die Öffnungen jeweils einzeln mittels einer jeweiligen Absperreinrichtung versperrbar sind, wobei ein in Längsrichtung des Luftauslass gemessener Abstand zwischen zwei benachbarten Öffnungen vorzugsweise maximal 0,5 m, weiter vorzugsweise maximal 0,3 m, beträgt. Ein solcher Luftauslass ist für den Einsatz in einem Laborraum besonders gut geeignet. Die Vorteile absperrbarer Öffnungen sind vorstehend bereits erläutert. Die genannten vorteilhaften Abstände zwischen den Öffnungen ermöglichen eine lokale Einstellung der Luftabgabe des Luftauslasses.

Erwähnenswert ist dabei, dass der Luftauslass als solcher vorteilhafterweise aus einer Mehrzahl von Modulen zusammengesetzt ist, die jeweils eine Länge von ca. 1,5 m bis 2,0 m aufweisen. Die einzelnen Module sind vorteilhafterweise in eine Längsrichtung des zusammengesetzten Luftauslasses betrachtet hintereinander stirnseitig nebeneinander angeordnet und vorteilhafterweise aneinander gekoppelt. Dabei ist es sowohl möglich, jedes Modul einzeln an einen Zuluftkanal anzuschließen als auch eine strömungstechnische Koppelung der Module vorzusehen. Die Koppelung ermöglicht es, dass lediglich ein einziges der Module an den Zuluftkanal angeschlossen werden muss, wobei die Zuluft sich in letzterem Fall sodann ausgehend von dem einen Modul auf die übrigen angekoppelten Module verteilt. Diese Variante birgt insbesondere den Vorteil, dass mehrere aneinander gekoppelte Module lediglich einen Volumenstromregler benötigen.

Das erfindungsgemäße Set ist ferner dann besonders von Vorteil, wenn der Luftauslass mindestens eine akustische Dämmschicht aufweist, die, vorzugsweise flächig, an dem Deckenteil und/oder dem Bodenteils mindestens einem Seitenteil des Gehäuses angeordnet ist. Dabei kann es gleichermaßen von Vorteil sein, die Dämmschicht in einem Inneren, das heißt auf Innenseiten der genannten Bauteile, des Luftauslasses anzuordnen oder auf deren Außenseiten oder beides. Die Dämmschicht kann sowohl die von dem Luftauslass erzeugten Strömungsgeräusche als auch Raumschall dämpfen.

Ein Betrieb eines erfindungsgemäßen Sets mit einem Luftauslasses, der ein Wärmetauschermodul aufweist, umfasst typischerweise die folgenden Verfahrensschritte:
a) Durch mindestens eine Lufteintrittsöffnung wird Zuluft in einen Lufteintrittsraum des Luftauslasses geleitet.
b) Ausgehend von dem Lufteintrittsraum, der mittels mindestens einer Trennwand räumlich von einem Luftaustrittsraum des Luftauslasses abgetrennt ist, wird die Zuluft durch mindestens eine in der Trennwand angeordnete Öffnung in den Luftaustrittsraum geleitet.
c) Ausgehend von der Öffnung wird die Zuluft an mindestens einem in dem Luftaustrittsraum angeordneten Wärmetauschermodul vorbeigeführt.
d) Mittels des Vorbeiführens der Zuluft an dem mindestens einen Wärmetauschermodul, das eine strömungstechnische Verbindung mit dem zu belüftenden Raum aufweist, wird in dem zu belüftenden Raum befindliche Raumluft induziert, wodurch die Raumluft durch das Wärmetauschermodul geleitet und dabei temperiert wird.
e) Die durch das Wärmetauschermodul geleitete temperierte Raumluft wird mit der durch die mindestens eine Öffnung geleiteten Zuluft im dem Luftaustrittsraum zu Mischluft vermischt.
f) Die Mischluft wird ausgehend von dem Luftaustrittsraum durch die mindestens eine Luftaustrittsöffnung in den zu belüftenden Raum geleitet,
g) wobei die Zuluft auch unmittelbar von dem Lufteintrittsraum in den zu belüftenden Raum, durch mindestens eine weitere Luftaustrittöffnung, die in einem Seitenteil und/oder in einem Bodenteil des Gehäuses angeordnet ist, geleitet werden kann.

Während des Betriebs des erfindungsgemäßen Luftauslasses können sich dabei unter Verwendung mindestens eines Wärmetauschermoduls im Wesentlichen zwei verschiedene Betriebszustände einstellen:
Zunächst ist ein "normaler" oder "aktiver" Betrieb denkbar, das heißt ein Betrieb, bei dem sämtliche Öffnungen in der Trennwand zwischen dem Lufteintritts- und dem Luftaustrittsraum geöffnet sind. Das mindestens eine Wärmetauschermodul kann in diesem Fall aktiviert oder deaktiviert sein und entsprechend auf eine Temperatur von induzierter Raumluft Einfluss nehmen oder nicht. In jedem Fall wird mittels der durch die Öffnungen hindurchtretenden Strömung Raumluft induziert, die durch das Wärmetauschermodul hindurch tritt. Sofern kein Wärmetauschermodul vorhanden ist, strömt die induzierte Raumluft durch den Bereich der unbestückten Aufnahme. Die induzierte Raumluft wird dabei von einer Unterseite des Luftauslasses her durch das Bodenteil in den Innenraum des Luftauslasses - typischerweise in den Luftaustrittsraum - "gesogen", wobei die Raumluft einen Lufteintrittsquerschnitt des Wärmetauschermoduls in eine von unten nach oben gerichtete Strömungsrichtung überquert. Dies beschreibt eine aufwärts gerichtete Durchströmung des Wärmetauschermoduls bzw. eines von der Aufnahme gebildeten Bereichs.

In einem weiteren Betriebszustand sind zumindest einige, möglicherweise sämtliche Öffnungen in der Trennwand versperrt. Dies hat zur Folge, dass zumindest lokal über die Länge des Luftauslasses bzw. des Luftaustrittsraums betrachtet keine Induktion von Raumluft stattfindet. Folglich tritt die Raumluft nicht - wie vorstehend skizziert - von einer Unterseite des Luftauslasses aufwärts strömend in selbigen ein. Sofern das Wärmetauschermodul in diesem Zustand aktiviert ist, bildet sich dennoch eine Luftströmung aus, die infolge der lokalen Temperaturbeeinflussung der Luft im Bereich des Wärmetauschermoduls auftritt. Befindet sich das Wärmetauschermodul beispielsweise in einem Kühlbetrieb, sinkt sich im Bereich des Wärmetauschermodul aufhaltende Luft aufgrund ihrer relativ zur Umgebung verringerten Temperatur nach unten. Dies bewirkt eine Nachströmung von umgebender Luft, die sodann von einer Oberseite des Wärmetauschermoduls her in selbigen Eintritt, sodann abkühlt und ebenso abwärts strömt. Folglich stellt sich eine abwärts gerichtete Durchströmung des Wärmetauschermoduls ein.

### Ausführungsbeispiele

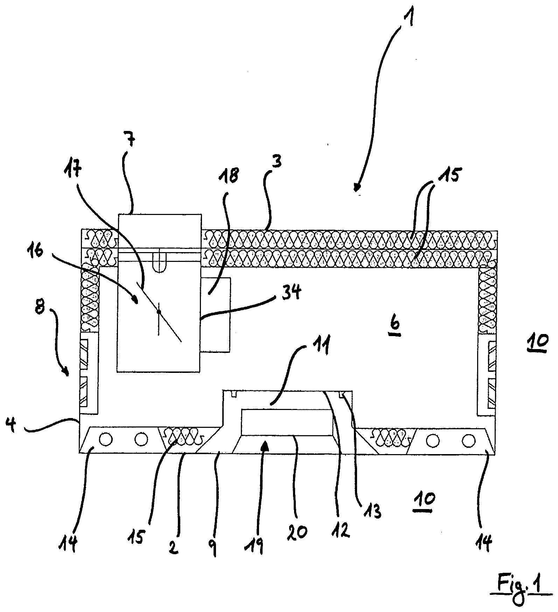

Das erfindungsgemäße Set mit Luftauslass wird nachfolgend anhand eines Ausführungsbeispiels, das in der Figur 1 dargestellt ist, näher erläutert. Es zeigt:
- Fig. 1:: Einen Querschnitt durch ein erfindungsgemäßes Set aus Decke und Luftauslass.

In den weiteren Figuren sind Beispiele für ein Set aus Decke und Luftauslass gezeigt, die eine bestückte Aufnahme zeigen und somit nicht in den Schutzbereich der Anmeldung fallen.

Es zeigen:
- Fig. 2:: wie Figur 1, jedoch in einem ersten Betriebsmodus,
- Fig. 2a:: wie Figur 2, jedoch mit einem Digestorium,
- Fig. 3:: wie Figur 1, jedoch in einem zweiten Betriebsmodus,
- Fig. 4:: wie Figur 1, jedoch in einem dritten Betriebsmodus,

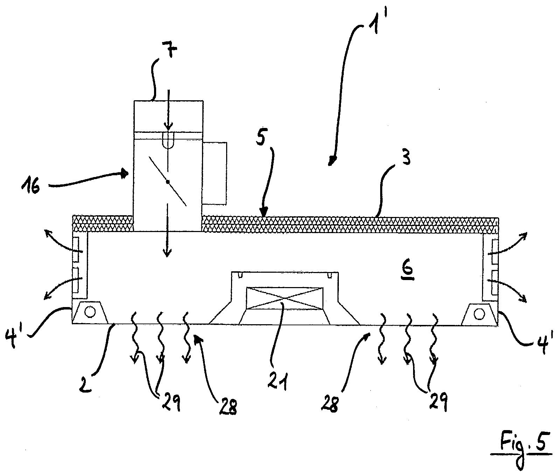

- Fig. 5:: Einen Querschnitt durch einen zweiten erfindungsgemäßen Luftauslass,
- Fig. 6a:: Detail eines Luftaustrittsraums mit einer ersten Lenkeinrichtung,
- Fig. 6b:: wie Figur 6a, jedoch mit einer von einer Stellung der Lenkeinrichtung abweichenden Stellung,
- Fig. 6c:: wie Figur 6a, jedoch mit einer zweiten Lenkeinrichtung,
- Fig. 6d:: wie Figur 6a, jedoch mit einer dritten Lenkeinrichtung,
- Fig. 7a:: Einen Querschnitt durch einen dritten erfindungsgemäßen Luftauslass und
- Fig. 7b:: wie Figur 7a, jedoch in einem anderen Betriebsmodus.

Ein erstes Ausführungsbeispiel, das in Figur 1 gezeigt ist, umfasst einen erfindungsgemäßen Luftauslass **1**, der ein Bodenteil **2**, ein Deckenteil **3** sowie vier Seitenteile **4** aufweist, von denen in dem in Figur 1 gezeigten Querschnitt lediglich zwei Seitenteile **4** dargestellt sind. Das Bodenteil **2**, das Deckenteil **3** und die Seitenteile **4** bilden ein Gehäuse **5** des Luftauslasses **1**, das einen Innenraum einschließt. Der Luftauslass **1** verfügt ferner über eine Lufteintrittsöffnung **7** sowie zwei seitliche Luftaustrittsöffnungen **8** und eine untere Luftaustrittsöffnung **9.** Die Lufteintrittsöffnung **7** ist an ein in Figur 1 nicht dargestelltes Zuluft-Kanalnetz angeschlossen, mittels dessen Zuluft in einen Lufteintrittsraum **6** des Luftauslasses **1** geleitet wird. Die Luftaustrittsöffnungen **8** sind in dem Lufteintrittsraum **6** angeordnet, das heißt sie sind dazu geeignet, die in den Lufteintrittsraum **6** eintretende Zuluft direkt an einen den Luftauslass **1** umgebenden Raum **10** zu leiten. Die Luftaustrittsöffnungen **7** sind hierzu in den Seitenteilen **4** des Luftauslasses **1** angeordnet, wobei ein Abströmung der Zuluft durch die Luftaustrittsöffnungen **8** in eine - relativ zu dem dargestellten Querschnitt betrachtet - seitliche Richtung gerichtet ist. Die Luftaustrittöffnung **9** ist hingegen in einem Luftaustrittsraum **11** angeordnet, der mittels einer Trennwand **12** von dem Lufteintrittsraum **6** räumlich getrennt ist. Die Luftaustrittsöffnung **9** ist im vorliegenden Beispiel zweigeteilt in einen linken und in einen rechten Teil. Sie befindet sich in dem Bodenteil **2** des Luftauslasses **1** und ist dazu geeignet, in dem Luftaustrittsraum **11** befindliche Luft in den Raum **10** abzuleiten. Die Trennwand **12** ist mit einer Vielzahl von Öffnungen **13** versehen, die hier als Düsen ausgeführt sind. Diese Öffnungen **13** bilden eine strömungstechnische Verbindung zwischen dem Lufteintrittsraum **6** und dem Luftaustrittsraum **11**, sodass in den Lufteintrittsraum **6** einströmende Zuluft in den Luftaustrittsraum **11** überströmen kann.

Der Luftauslass **1** verfügt ferner über zwei Beleuchtungsmodule **14,** die seitlich an einer Unterseite des Luftauslasses **1** angeordnet sind und einen bündigen Abschluss mit dem Bodenteil **2** bilden. Ferner verfügt der Luftauslass **1** über akustische Dämmschichten **15**, die an dem Bodenteil **2**, dem Deckenteil **3** und den Seitenteilen **4** angeordnet sind. Das Deckenteil **3** ist als einziges Teil des Gehäuses **5** beidseitig jeweils mit einer akustischen Dämmschicht **15** ausgestattet, wobei eine akustische Dämmschicht **15** auf einer dem Innenraum des Gehäuses **5** zugewandten Innenseite des Deckenteils **3** und eine andere akustische Dämmschicht **15** auf einer dem Innenraum des Gehäuses **5** abgewandten Außenseite des Deckenteils 3 angeordnet sind. Die akustischen Dämmschichten **15** sorgen für eine Dämpfung von mittels des Luftauslasses **1** erzeugter Strömungsgeräusche und zur Dämpfung von Raumschall. Ferner verfügt der Luftauslass **1** über eine Regeleinrichtung **16**, die von einer Regelklappe **17** und einer nicht näher dargestellten Antriebseinrichtung **18** gebildet ist. Die Regelklappe **17** ist innerhalb eines hier als Rundrohr ausgeführten Zuluftkanals **34** angeordnet, der an die Lufteintrittsöffnung **7** des Luftauslasses **1** anschließt und sich ausgehend von dieser in Richtung des Innenraums des Gehäuses **5** erstreckt. Die Regelklappe **17** befindet sich hier in einer Zwischenstellung, in der ein Strömungsquerschnitt des Zuluftkanals **34** weder vollständig frei gegeben ist noch vollständig verschlossen ist. Der Zuluftkanal **34** mündet in den Lufteintrittsraum **6.**

Der Luftaustrittsraum **11** verfügt über eine Aufnahme **19**, die im gezeigten Beispiel nicht bestückt ist. Die Aufnahme **19** ist hier von einem Rahmen **20** gebildet, der frei ist. Ausgehend von dem Rahmen **20** erstrecken sich Leitbleche in Richtung auf das Bodenteil **2** des Luftauslasses **1**, die jeweils eine seitliche Begrenzung des linken sowie des rechten Teils der Luftaustrittsöffnung 9 darstellen. Die unbestückte Aufnahme **19** in dem Luftaustrittsraum **11** ist zur Lagerung eines nicht dargestellten Wärmetauschermoduls **21** geeignet. Für ein Beispiel, das ein solches Wärmetauschermodul **21** umfasst, wird auf die übrigen Figuren verwiesen. Der Rahmen **20** ist so ausgebildet, dass er zur besonders einfachen Montage des entsprechenden Wärmetauschermoduls **21** geeignet ist. Hier sind insbesondere Schnapp-, Clip-, Click-, Rast- oder Steckverbindungen sowie sonstige werkzeuglose Verbindungen vorteilhaft. Selbstverständlich sind gleichermaßen Verbindungen denkbar, die den Einsatz von Werkzeug erfordern. Das Wärmetauschermodul **21** weist solche Abmessungen auf, dass es ohne Weiteres in die Aufnahme **19** passt. Anpassungsarbeiten im Zuge eines Einbaus des Wärmetauschermoduls **21** sind nicht erforderlich.

Der hier dargestellte Luftauslass **1** weist eine Länge von 6,0 m, eine Breite von 1,4 m und eine Höhe von 0,85 m auf. Diese Abmessungen sind vergleichsweise kompakt, wobei der Luftauslass **1** sämtliche relevanten Bestandteile umfasst und folglich eine gute Raumausnutzung in dem zu belüftenden Raum **10** ermöglicht.

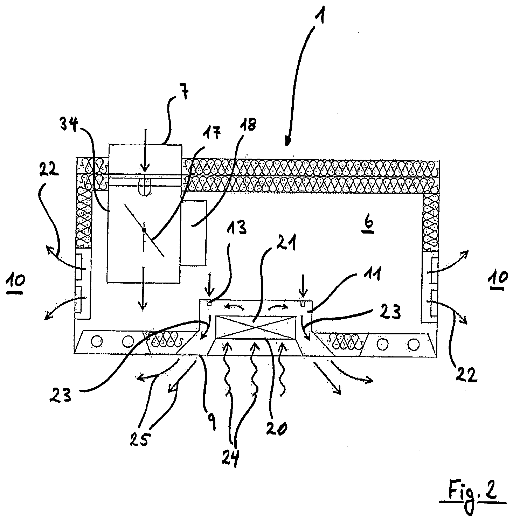

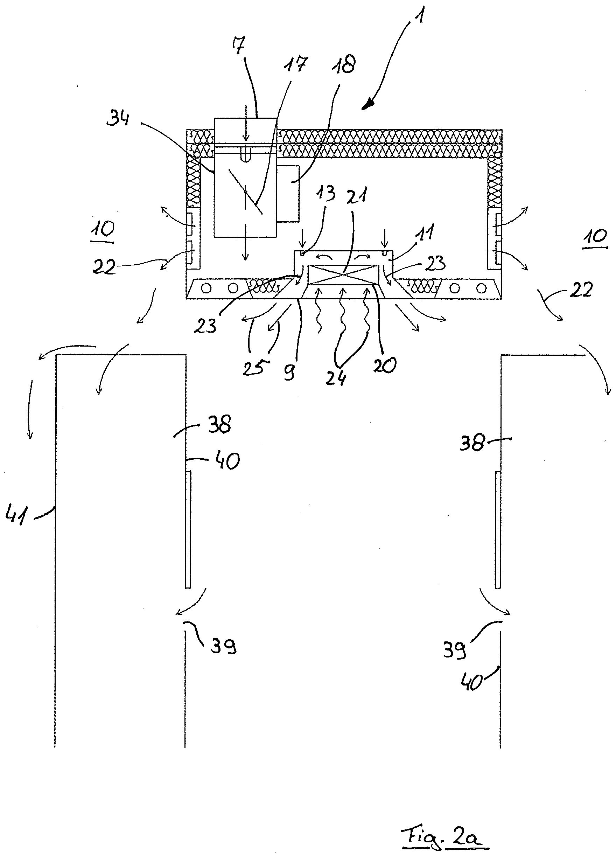

In Figur 2 ist ein nicht die Erfindung betreffender Luftauslass **1** in einem ersten Betriebsmodus gezeigt, wobei im Unterschied zur Ausführung gemäß dem Beispiel aus Figur 1 nunmehr ein Wärmetauschermodul **21** in die Aufnahme **19** eingesetzt ist. Ausgehend von dem unbestückten Luftauslass **1** gemäß Figur 1 ist das Wärmetauschermodul **21** in einem Einbauzustand des Luftauslasses **1** in die dafür vorgesehene Aufnahme **19** eingebaut worden. In seinem Einbauzustand ist der Luftauslass **1** fest in dem zu belüftenden Raum **10** installiert, im gezeigten Beispiel unter eine Decke des zu belüftenden Raumes **10.** Insoweit handelt es sich bei dem hier gezeigten Beispiel um einen Deckenauslass. Insbesondere ist es zur Nachrüstung des erfindungsgemäßen Luftauslasses **1** nicht notwendig, diesen auszubauen oder gar komplett auszutauschen.

Das Wärmetauschermodul **21** ist an einen nicht dargestellten Wasserkreislauf angeschlossen, der das Wärmetauschermodul **21** mit Wasser versorgt. Hier befindet sich der Luftauslass **1** in einem Kühlbetrieb, bei dem das Wärmetauschermodul **21** mittels nicht dargestellter Anschlussleitungen mit kaltem Wasser beschickt wird. Alternativ ist ebenso ein Heizbetrieb möglich, der hier allerdings nicht dargestellt ist. Wasserleitungen des Wärmetauschermoduls **21**, die das kalte Wasser von den Anschlussleitungen aufnehmen, sind mit Wärmeleitlamellen wärmeleitend verbunden, wobei die Wärmeleitlamellen vorzugsweise aus Aluminium gefertigt sind. Die Wärmeleitlamellen werden von Luft, die das Wärmetauschermodul **21** umgibt, umströmt. Dabei gibt die Luft Energie in Form von Wärme an die Wärmeleitlamellen ab, die die Wärme wiederum an die Wasserleitungen und somit letztendlich an das Wasser übergeben. Auf diese Weise kann der Luft Wärme entzogen werden.

In Figur 2 dargestellte Pfeile verdeutlichen ein Strömungsschema des dort dargestellten ersten Betriebsmodus' des Luftauslasses **1.** Es ist erkennbar, dass die seitlichen Luftaustrittsöffnungen **8** den Lufteintrittsraum **6** direkt mit dem Raum **10** verbinden. Die Luftaustrittöffnungen **8** verfügen jeweils über eine Lenkeinrichtung, die eine Abströmrichtung der Zuluft in den Raum **10** in die dargestellten Richtungen bewirken (Pfeile **22**). Die Öffnungen **13** in der Trennwand **12** sind geöffnet, so dass die Zuluft ausgehend von dem Lufteintrittsraum **6** in den Luftaustrittsraum **11** überströmt. Da die Öffnungen **13** als Düsen ausgeführt sind, wird die Zuluft im Zuge ihres Überströmens beschleunigt, wobei die Düsen seitlich versetzt relativ zum Wärmetauschermodul **21** angeordnet sind. Dies führt dazu, dass die Zuluft an dem Wärmetauschermodul **21** vorbeigeführt wird (Pfeile **23**). Ein direktes Durchströmen des Wärmetauschermoduls **21** mittels der Zuluft findet nicht statt. Stattdessen führt die an dem Wärmetauschermodul **21** vorbeiströmende Zuluft dazu, dass stehende Luft, die sich oberhalb des Wärmetauschermoduls **21** aufhält, "mitgerissen" wird, wodurch ein lokaler Unterdruck entsteht. Dieser Unterdruck wird wiederum dadurch ausgeglichen, dass Raumluft, die unterhalb des Wärmetauschermoduls **21** in dem Raum **10** befindlich ist, angesaugt wird, wobei die Raumluft das Wärmetauschermodul **21** in Form einer aufwärts gerichteten Strömung durchströmt (Pfeile **24**). Die Zuluft und die Raumluft mischen sich sodann noch innerhalb des Luftaustrittsraums **11** zu Mischluft. Die Mischluft strömt anschließend durch die im Bodenteil **2** angeordnete Luftaustrittsöffnung **9** in den Raum **10** ab (Pfeile **25**).

In der Figur 2a wird der Luftauslass **1** gemäß Figur 2 dargestellt, wobei sich seitlich des Luftauslasses **1** jeweils ein Digestorium **38** befindet. Die in eine seitliche Richtung (Pfeil **22**) aus den Luftaustrittsöffnungen **8** ausströmende Zuluft strömt oberhalb des Digestoriums **38** und wird dort zunächst abgebremst, bevor die Zuluft in Richtung eines hier nicht dargestellten Raumbodens abfällt. Die Zuluft kann dabei sowohl an einer Vorderseite **40** als auch an einer Rückseite **41** oder seitlich des jeweiligen Digestoriums **38** vorbei geleitet werden. Aufgrund dessen kann verhindert werden, dass eine lokal erhöhte Strömungsgeschwindigkeit in einem Bereich, in dem eine Öffnung **39** des jeweiligen Digestoriums **38** angeordnet ist, auftritt.

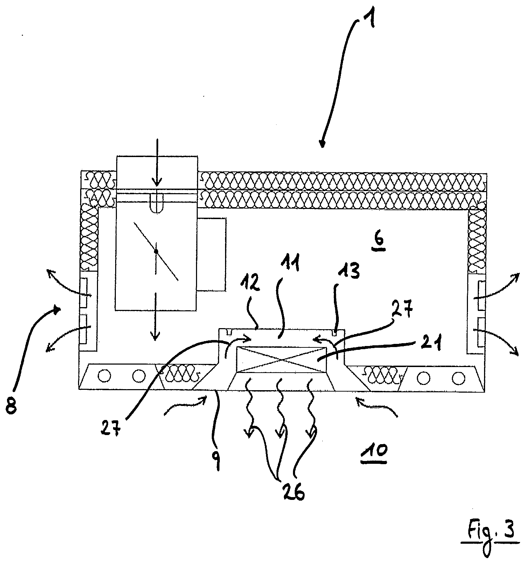

Ein zweiter Betriebsmodus des Luftauslasses **1** aus Figur 2 ist in Figur 3 dargestellt. Im Unterschied zu der Betriebsweise gemäß Figur 2 sind die Öffnungen **13** versperrt. Folglich findet ein Überströmen von Zuluft von dem Lufteintrittsraum **6** in den Luftaustrittsraum **11** nicht statt. Gleichwohl ist das Wärmetauschermodul **21** aktiviert, das heißt es wird von (in diesem Fall kühlem) Wasser durchströmt. Dies bewirkt eine Kühlung der das Wärmetauschermodul umgebenden Luft, der Energie entzogen wird. Die gekühlte Luft sinkt aufgrund ihrer gegenüber warmer Luft höheren Dichte abwärts in den Raum **10** (Pfeile **26**). Hierdurch wird ein Sog erzeugt, der ein Nachströmen von Raumluft durch die Lufteintrittsöffnung **9** bewirkt, die sodann von einer Oberseite des Wärmetauschermoduls **21** her in selbigen eintritt (Pfeile **27**). Im Vergleich zum ersten Betriebsmodus wird das Wärmetauschermodul **21** folglich in entgegengesetzter Richtung von Raumluft durchströmt.

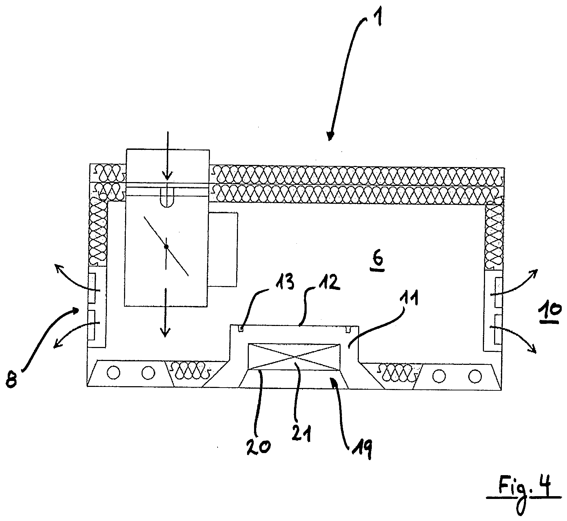

Ein dritter Betriebsmodus des nicht die Erfindung betreffenden Luftauslasses **1** ist schließlich in Figur 4 dargestellt. Hier ist das Wärmetauschermodul **21** deaktiviert, das heißt in Wasserleitungen des Wärmetauschermoduls **21** vorhandenes Wasser steht still, wobei es alsbald eine Raumtemperatur annimmt, sodass kein Energieaustausch mit der Raumluft erfolgt. Ferner sind die Öffnungen **13** versperrt. Mithin ist der Luftaustrittraum **11** gewissermaßen "stillgelegt", da dort keine planmäßige Luftströmung erfolgt. Stattdessen wird die dem Luftauslass **1** zukommende Zuluft vollständig mittels der seitlichen Luftaustrittsöffnungen **8** an den Raum **10** abgegeben. Auch dieser Betriebsmodus ist besonders geeignet für den Fall, dass Digestorien **38** in dem Raum **10** angeordnet sind.

Ein weiteres Ausführungsbeispiel, das in Figur 4 dargestellt ist, umfasst einen weiteren nicht die Erfindung betreffenden Luftauslass **1'.** Dieser unterscheidet sich von dem bisherigen Luftauslass **1** insbesondere durch die Höhe der Seitenteile **4',** die hier lediglich 0,40 m hoch sind. Aus diesem Grund ist die Regeleinrichtung **16** bei dem Luftauslass **1'** außerhalb des Gehäuses **5** angeordnet. Der Luftauslass **1'** verfügt über eine Mehrzahl von Luftaustrittsöffnungen, wobei zusätzlich zu den bereits vorstehend beschriebenen seitlichen Luftaustrittsöffnungen **8** und der Luftaustrittsöffnung **9** in dem Luftaustrittsraum **11** zusätzlich Luftaustrittsöffnungen **28** in dem Bodenteil **2** des Luftauslasses **1'** angeordnet sind. Diese verbinden den Lufteintrittsraum **6** direkt mit dem zu belüftenden Raum **10** (Pfeile **29**).

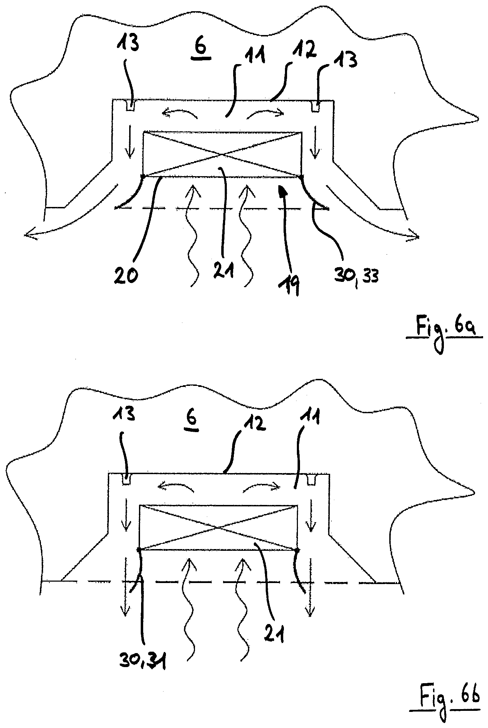

In den übrigen Figuren 6a bis 6d sind Ausführungsbeispiele für Lenkeinrichtungen **30, 31, 32** dargestellt, die zur Lenkung der den Luftaustrittraum **11** verlassenden Luft genutzt werden können. Eine untere Begrenzung des Luftaustrittsraums **11** ist von einem gestrichelt dargestellten Lochblech gebildet. Alternativ könnte eine Verbindung in den Raum **10** vollständig geöffnet sein, wobei das Bodenteil **3** in dem Bereich der Luftaustrittsöffnung **9** gewissermaßen zu 100 % von der Luftaustrittsöffnung gebildet wäre.

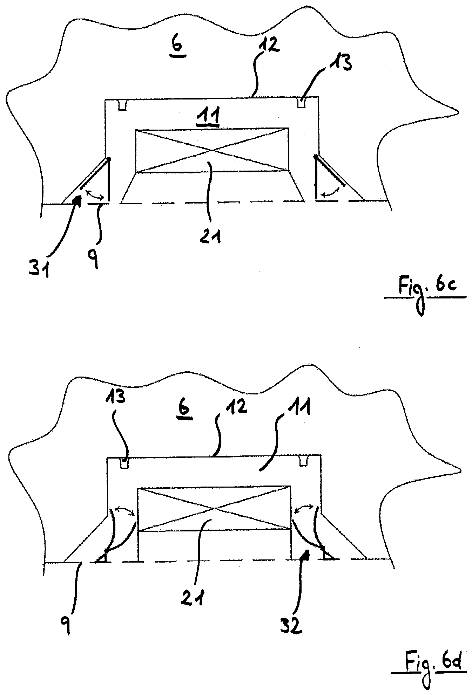

Eine erste Lenkeinrichtung **30** ist in den Figuren 6a und 6b veranschaulicht. Die Lenkeinrichtung **30** umfasst gekrümmte Bleche **33,** die an seitlichen Rändern des Rahmens **20** der Aufnahme **19** entlang angeordnet sind. Ein Anschluss der Bleche **33** an den Rahmen **20** ist gelenkig, sodass die Bleche **33** verschwenkbar sind. Mittels dieser Verschwenkbarkeit ist eine Lenkung der Mischluft erreichbar, wie sich aus den Strömungspfeilen in den Figuren 6a und 6b ergibt. Dabei wird eine im Wesentlichen horizontale Abströmrichtung (Figur 6a) in einem Kühlbetrieb des jeweiligen Luftauslasses angestrebt, während eine im Wesentlichen vertikale Abströmung (Figur 6b) im Heizbetrieb angestrebt wird. Die Lenkeinrichtungen **31**, **32** gemäß den Darstellungen in den Figuren 6c und 6d sind ebenso für eine Lenkung des Mischluftstroms geeignet.

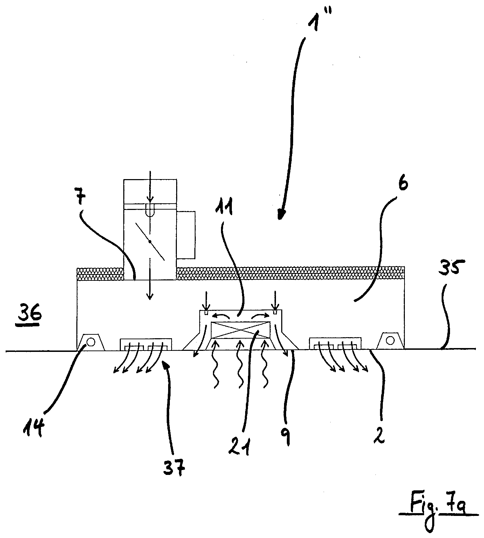

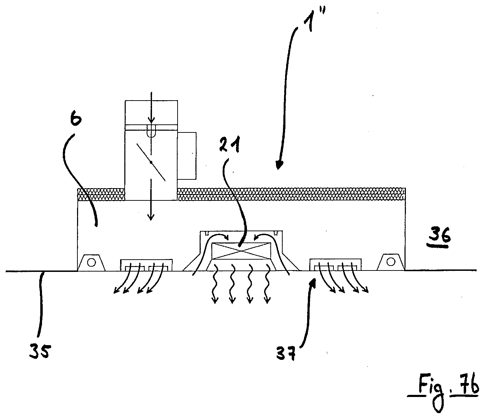

Ein weiteres Ausführungsbeispiel, das in den Figuren 7a und 7b dargestellt ist, umfasst einen dritten, nicht die Erfindung betreffenden Luftauslass **1**", der ähnlich zum vorstehend beschriebenen Luftauslass **1'** aufgebaut ist. Insbesondere weist auch der dritte Luftauslass **1**" eine vergleichsweise geringe Bauhöhe auf. Im Unterschied zum zweiten Luftauslass **1'** verfügt der Luftauslass **1**" jedoch über eine seitliche Luftaustrittsöffnung **8**, durch die in dem Lufteintrittsraum **6** befindliche Zuluft seitlich an den zu belüftenden Raum **10** abströmbar ist. Eine solche Abströmung wäre bei dem dritten Luftauslass **1"** nicht sinnvoll, da die Seitenteile **4** des Luftauslasses **1**" sich nicht direkt in dem Raum **10** befinden, sondern mittels einer abgehängten Decke **35** von dem Raum **10** räumlich getrennt sind. Das heißt, das seitlich aus dem Luftauslass **1**" abströmende Zuluft lediglich in einen Deckenzwischenraum **36** gelangen würde, der zwischen der abgehängten Decke **35** und einer nicht dargestellten Rohbaudecke befindlich ist.

Das Bodenteil **2** des Luftauslasses **1"** schließt bündig mit der abgehängten Decke **35** ab. Der Luftauslass **1"** verfügt über insgesamt drei Luftaustrittsöffnungen **9**, **37**, wobei die Luftaustrittsöffnung **9 - wie** bei den zuvor beschriebenen Luftauslässen **1, 1'** - in dem Luftaustrittsraum **11** angeordnet ist und Luftaustrittsöffnungen **37** in dem Lufteintrittsraum **6** angeordnet sind, nämlich in dem Bodenteil **2** des Luftauslasses **1".** Die Luftaustrittsöffnungen **37** sind dazu geeignet, die in dem Luftaustrittsraum **6** befindliche Zuluft an einer Unterseite des Luftauslasses **1"** in den Raum **10** abzuströmen. Sie verfügen vorteilhafterweise jeweils über eine Lenkeinrichtung sowie eine Absperreinrichtung, mittels denen ein die Luftaustrittsöffnungen **37** durchströmender Volumenstrom sowie eine Abströmrichtung desselben einstellbar sind.

In Figur 7a ist der Luftauslass **1"** in einem ersten Betriebsmodus analog zu demjenigen gemäß dem Beispiel, das in Figur 2 dargestellt ist, dargestellt. In Figur 7b ist der Luftauslass **1"** hingegen in einem zweiten Betriebsmodus dargestellt, der demjenigen gemäß der vorstehend beschriebenen Figur 3 entspricht. Diese zweite Betriebsmodus ist besonders gut dazu geeignet, im Bereich unterhalb des Luftaustrittsraums **11** eine vertikal nach unten gerichtete turbulenzarme Strömung zu erzeugen, die einen Bereich unterhalb des Luftauslasses **1"** in einen rechten und einen linken Teil unterteilt. Dies ist insbesondere für einen Einsatz des Luftauslasses **1"** in einem Laborraum besonders vorteilhaft, in dem mittels dieser vertikalen turbulenzarmen Strömung benachbarte Laborzellen strömungstechnisch voneinander trennbar sind. Dabei ist der Luftauslass **1"** optimalerweise so in dem Raum **10** angeordnet, dass jeweils unterhalb von seinen Beleuchtungsmodulen **14** eine Laborzelle angeordnet ist.

### Bezugszeichenliste

- 1, 1', 1": Luftauslass
- 2: Bodenteil
- 3: Deckenteil
- 4, 4': Seitenteil
- 5: Gehäuse
- 6: Lufteintrittsraum
- 7: Lufteintrittsöffnung
- 8: Luftaustrittsöffnung
- 9: Luftaustrittsöffnung
- 10: Raum
- 11: Luftaustrittsraum
- 12: Trennwand
- 13: Öffnung
- 14: Beleuchtungsmodul
- 15: Dämmschicht
- 16: Regeleinrichtung
- 17: Regelklappe
- 18: Antriebseinrichtung
- 19: Aufnahme
- 20: Rahmen
- 21: Wärmetauschermodul
- 22: Pfeil
- 23: Pfeil
- 24: Pfeil
- 25: Pfeil
- 26: Pfeil
- 27: Pfeil
- 28: Luftaustrittsöffnung
- 29: Pfeil
- 30: Lenkeinrichtung
- 31: Lenkeinrichtung
- 32: Lenkeinrichtung
- 33: Blech
- 34: Zuluftkanal
- 35: Decke
- 36: Deckenzwischenraum
- 37: Luftaustrittsöffnung
- 38: Digestorium
- 39: Öffnung
- 40: Vorderseite
- 41: Rückseite

## Patentansprüche

1. Set, umfassend eine Decke eines zu belüftenden Raumes (10) und mindestens einen Luftauslass (1) in Form eines Deckenauslasses, wobei sich der Luftauslass (1) insbesondere zur Belüftung eines Laborraums (10) eignet, der Luftauslass (1) umfassend ein Gehäuse (5), das von mindestens einem Bodenteil (2), mindestens einem Deckenteil (3) sowie mindestens einem Seitenteil (4, 4') gebildet ist, die gemeinsam einen Innenraum des Gehäuses (5) räumlich begrenzen, wobei das Gehäuse (5) mindestens eine Lufteintrittsöffnung (7) und mindestens eine Luftaustrittsöffnung (9) umfasst, wobei mittels der Lufteintrittsöffnung (7) Zuluft in den Luftauslass (1) hinein und mittels der Luftaustrittsöffnung (9) Luft aus dem Luftauslass (1) heraus leitbar ist, wobei der Innenraum des Gehäuses (5) mittels mindestens einer Trennwand (12) in mindestens einen Lufteintrittsraum (6) und mindestens einen Luftaustrittsraum (11) unterteilt ist und wobei dem Lufteintrittsraum (6) die Lufteintrittsöffnung (7) und dem Luftaustrittsraum (11) die Luftaustrittsöffnung (9) zugeordnet sind und die Trennwand (12) mindestens eine Öffnung (13) aufweist, mittels derer eine strömungstechnische Verbindung zwischen dem Lufteintrittsraum (6) und dem Luftaustrittsraum (11) geschaffen ist, wobei der Luftauslass (1) mindestens eine zweite Luftaustrittsöffnung (8, 37) besitzt, die in dem Lufteintrittsraum (6) angeordnet ist und eine direkte strömungstechnische Verbindung zwischen dem Lufteintrittsraum (6) und dem zu belüftenden Raum (10) schafft, wobei
- die zweite Luftaustrittsöffnung (8) in mindestens einem Seitenteil (4, 4') des Gehäuses (5) angeordnet ist, sodass die in dem Lufteintrittsraum (6) befindliche Zuluft - in einem vertikalen Querschnitt des Luftauslasses (1, 1') betrachtet - seitlich und vorzugsweise ungefähr horizontal aus dem Luftauslass (1) heraus leitbar ist, und/oder
- die zweite Luftaustrittsöffnung (37) in dem Bodenteil (2) des Luftauslasses (1") angeordnet ist, sodass die in dem Lufteintrittsraum (6) befindliche Zuluft - in dem vertikalen Querschnitt des Luftauslasses betrachtet - an einer Unterseite des Luftauslasses, vorzugsweise in vertikale Richtung nach unten, aus dem Luftauslass heraus leitbar ist,
**dadurch gekennzeichnet, dass** der Luftauslass (1) in seinem Einbauzustand, in dem dieser fest unter der Decke des zu belüftenden Raums (10) installiert ist, mindestens eine unbestückte Aufnahme (19) besitzt, die dafür geeignet ist, mindestens ein Wärmetauschermodul (21) aufzunehmen.

2. Set nach Anspruch 1, **dadurch gekennzeichnet, dass** die unbestückte Aufnahme (19) in dem Luftaustrittsraum (11) angeordnet ist.

3. Set nach Anspruch 2, **dadurch gekennzeichnet, dass** die durch die mindestens eine Öffnung (13) der Trennwand (12) in den Luftaustrittsraum (11) strömende Zuluft an der Aufnahme (19) vorbei führbar ist.

4. Set nach einem der Ansprüche 1 bis 3, **dadurch gekennzeichnet, dass** die erste Luftaustrittsöffnung (9), die in dem Luftaustrittsraum (11) angeordnet ist, in dem Bodenteil (2) des Gehäuses (5) angeordnet ist, sodass in dem Luftaustrittsraum (11) befindliche Luft - in einem vertikalen Querschnitt des Luftauslasses (1) betrachtet-an einer Unterseite des Luftauslasses (1) aus dem Luftauslass (1) heraus leitbar ist.

5. Set nach einem der Ansprüche 1 bis 4, **dadurch gekennzeichnet, dass** die mindestens eine Luftaustrittsöffnung (8, 9, 37) mit einer Lenkeinrichtung (30, 31, 32) zusammenwirkt, mittels derer eine Abströmrichtung der aus dem Luftauslass (1) heraus geleiteten Zuluft einstellbar ist.

6. Set nach einem der Ansprüche 1 bis 5, **dadurch gekennzeichnet, dass** die mindestens eine Öffnung (13) in der Trennwand (12) von einer Düse gebildet ist, wobei die Düse vorzugsweise mittels einer Absperreinrichtung versperrbar ist, sodass ein Überströmen der Zuluft ausgehend von dem Lufteintrittsraum (6) in den Luftaustrittsraum (11) verhindert ist.

7. Set nach einem der Ansprüche 1 bis 6, **dadurch gekennzeichnet, dass** das Gehäuse (5) mindestens ein Beleuchtungsmodul (14) umfasst, die vorzugsweise in dem Innenraum des Gehäuses (5) angeordnet und mit dem Bodenteil (2) oder einem Seitenteil (4, 4') des Gebäudes (5) verbunden ist, wobei das Gehäuse (5) weiter vorzugsweise eine Breite von mindestens 1,30 m, vorzugsweise von 1,40 m, aufweist.

8. Set nach einem der Ansprüche 1 bis 7, **gekennzeichnet durch** eine Regeleinrichtung (16), mittels derer ein Volumenstrom der **durch** die Lufteintrittsöffnung (7) in den Lufteintrittsraum (6) strömenden Zuluft regulierbar ist, wobei die Regeleinrichtung (16) vorzugsweise eine Regelklappe (17) sowie eine Antriebseinrichtung (18) umfasst, wobei vorzugsweise mittels der Regelklappe (17), die mittels der Antriebseinrichtung (18) bewegbar ist, ein freier Strömungsquerschnitt eines mit der Lufteintrittsöffnung (7) verbundenen Zuluftkanals (34) zwischen einer Offenstellung, in der der Strömungsquerschnitt vollständig freigegeben ist, und einer Schließstellung, in der der Strömungsquerschnitt vollständig versperrt ist, vorzugsweise stufenlos, einstellbar ist.

9. Set nach Anspruch 8, **dadurch gekennzeichnet, dass** die Regeleinrichtung (16) in dem Innenraum des Gehäuses (5) angeordnet ist, wobei sich vorzugsweise der Zuluftkanal (34) ausgehend von der Lufteintrittsöffnung (7) in Richtung des Innenraums des Gehäuses (5) erstreckt.

10. Set nach einem der Ansprüche 1 bis 9, **gekennzeichnet durch** eine lang gestreckte Form, wobei der Luftauslass eine Länge von mindestens 5,0 m, vorzugsweise mindestens 5,5 m, weiter vorzugsweise mindestens 6,0 m, aufweist, wobei weiter vorzugsweise in der Trennwand (12) eine Mehrzahl von Öffnungen (13) verteilt über die Länge des Luftauslasses (1) angeordnet ist, wobei die Öffnungen (13) jeweils einzeln mittels einer jeweiligen Absperreinrichtung versperrbar sind, wobei ein in Längsrichtung des Luftauslass gemessener Abstand zwischen zwei benachbarten Öffnungen (13) vorzugsweise maximal 0,5 m, weiter vorzugsweise maximal 0,3 m, beträgt.

11. Set nach einem der Ansprüche 1 bis 10, **gekennzeichnet durch** mindestens eine akustische Dämmschicht (15), die, vorzugsweise flächig, auf dem Deckenteils (3) und/oder dem Bodenteils (2) und/oder dem mindestens einen Seitenteil (4, 4') des Gehäuses (5) angeordnet ist.

## Claims

1. A set comprising a ceiling of a room (10) to be ventilated and at least one air outlet (1) in the form of a ceiling outlet, the air outlet (1) being suitable for ventilating a laboratory (10) in particular, the air outlet (1) comprising a housing (5), which is formed from at least one base part (2), at least one ceiling part (3) and at least one side part (4, 4'), which together spatially delimit an interior of the housing (5), the housing (5) comprising at least one air inlet opening (7) and at least one air outlet opening (9), it being possible to conduct supply air into the air outlet (1) by means of the air inlet opening (7) and to conduct air out of the air outlet (1) by means of the air outlet opening (9), the interior of the housing (5) being divided into at least one air inlet space (6) and at least one air outlet space (11) by means of at least one separating wall (12), and the air inlet opening (7) being assigned to the air inlet space (6) and the air outlet opening (9) being assigned to the air outlet space (11), and the separating wall (12) having at least one opening (13), by means of which an aerodynamic connection between the air inlet space (6) and the air outlet space (11) is created, the air outlet (1) having at least one second air outlet opening (8, 37), which is arranged in the air inlet space (6) and creates a direct aerodynamic connection between the air inlet space (6) and the room (10) to be ventilated,
- the second air outlet opening (8) being arranged in at least one side part (4, 4') of the housing (5), so that the supply air located in the air inlet space (6) - as observed in a vertical cross section of the air outlet (1, 1') - can be conducted out of the air outlet (1) to the side and preferably approximately horizontally,
and/or
- the second air outlet opening (37) being arranged in the base part (2) of the air outlet (1"), so that the supply air located in the air inlet space (6) - as observed in the vertical cross section of the air outlet - can be conducted out of the air outlet at an underside of the air outlet, preferably downwards in the vertical direction,
**characterized in that** the air outlet (1), in the installation state thereof in which the same is installed fixedly below the ceiling of the room (10) to be ventilated, has at least one unpopulated mounting (19), which is suitable for accommodating at least one heat exchanger module (21).

2. The set according to Claim 1, **characterized in that** the unpopulated mounting (19) is arranged in the air outlet space (11).

3. The set according to Claim 2, **characterized in that** the supply air flowing through the at least one opening (13) of the separating wall (12) into the air outlet space (11) can be guided past the mounting (19).

4. The set according to one of Claims 1 to 3, **characterized in that** the first air outlet opening (9), which is arranged in the air outlet space (11), is arranged in the base part (2) of the housing (5), so that air located in the air outlet space (11) - as observed in a vertical cross section of the air outlet (1) - can be guided out of the air outlet (1) at an underside of the air outlet (1).

5. The set according to one of Claims 1 to 4, **characterized in that** the at least one air outlet opening (8, 9, 37) interacts with a steering device (30, 31, 32), by means of which an outflow direction of the supply air conducted out of the air outlet (1) can be adjusted.

6. The set according to one of Claims 1 to 5, **characterized in that** the at least one opening (13) in the separating wall (12) is formed by a nozzle, wherein the nozzle can preferably be closed by means of a shut-off device, so that overflowing of supply air emanating from the air inlet space (6) into the air outlet space (11) is prevented.

7. The set according to one of Claims 1 to 6, **characterized in that** the housing (5) comprises at least one lighting module (14), which is preferably arranged in the interior of the housing (5) and is connected to the base part (2) or a side part (4, 4') of the housing (5), wherein the housing (5) furthermore preferably has a width of at least 1.30 m, preferably of 1.40 m.

8. The set according one of Claims 1 to 7, **characterized by** a control device (16), by means of which a volumetric flow of the supply air flowing through the air inlet opening (7) into the air inlet space (6) can be controlled, wherein the control device (16) preferably comprises a control damper (17) and a drive device (18), wherein a free flow cross section of a supply air duct (34) connected to the air inlet opening (7) can preferably be adjusted, preferably in an infinitely variable manner, by means of the control damper (17), which can be moved by means of the drive device (18), between an open position, in which the flow cross section is completely clear, and a closed position, in which the flow cross section is completely closed.

9. The set according to Claim 8, **characterized in that** the control device (16) is arranged in the interior of the housing (5), wherein the supply air duct (34) preferably extends starting from the air inlet opening (7) in the direction of the interior of the housing (5).

10. The set according to one of Claims 1 to 9, **characterized by** an elongated shape, wherein the air outlet has a length of at least 5.0 m, preferably at least 5.5 m, further preferably at least 6.0 m, wherein a plurality of openings (13) is further preferably arranged in the separating wall (12) in a distributed manner over the length of the air outlet (1), wherein the openings (13) can in each case be closed individually by means of a respective shut-off device, wherein a spacing between two adjacent openings (13) measured in the longitudinal direction of the air outlet is preferably no more than 0.5 m, further preferably no more than 0.3 m.

11. The set according to one of Claims 1 to 10, **characterized by** at least one acoustic damping layer (15), which is arranged, preferably flat, on the ceiling part (3) and/or the base part (2) and/or the at least one side part (4, 4') of the housing (5).

## Revendications

1. Ensemble comprenant un plafond d'une pièce (10) à aérer et au moins une sortie d'air (1) sous la forme d'une sortie en plafond, la sortie d'air (1) étant notamment adaptée pour aérer un espace de laboratoire (10), la sortie d'air (1) comprenant un boîtier (5) qui est formé par au moins un élément de fond inférieur (2), au moins un élément de fond supérieur (3) ainsi que par au moins une élément latéral (4, 4') qui ensemble, délimitent physiquement un espace intérieur du boîtier (5) le boîtier (5) comprenant au moins une ouverture d'entrée (7) d'air et au moins une ouverture de sortie (9) d'air, à l'aide de l'ouverture d'entrée (7) d'air, de l'air frais pouvant être dirigé à l'intérieur de la sortie d'air (1) et à l'aide de l'ouverture de sortie (9) d'air, de l'air pouvant être dirigé hors de la sortie d'air (1), à l'aide d'au moins une paroi de séparation (12), l'espace intérieur du boîtier (5) étant divisé en au moins un espace d'entrée (6) d'air et au moins un espace de sortie (11) d'air et à l'espace d'entrée (6) d'air étant associée l'ouverture d'entrée (7) d'air et à l'espace de sortie (11) d'air étant associée l'ouverture de sortie (9) d'air et la paroi de séparation (12) comportant au moins une ouverture (13), à l'aide de laquelle est créée une liaison technique de circulation entre l'espace d'entrée (6) d'air et l'espace de sortie (11) d'air, la sortie d'air (1) disposant d'au moins une deuxième ouverture de sortie (8, 37) d'air qui est placée dans l'espace d'entrée (6) d'air et qui créé une liaison technique directe de circulation entre l'espace d'entrée (6) d'air et la pièce (10) à aérer,
- la deuxième ouverture de sortie (8) d'air étant placée dans au moins un élément latéral (4, 4') du boîtier (5), de telle sorte que l'air frais se trouvant dans l'espace d'entrée (6) d'air (considéré dans une section transversale verticale de la sortie d'air (1, 1') puisse être dirigé latéralement et de préférence approximativement à l'horizontale hors de la sortie d'air (1),
et/ou
- la deuxième ouverture de sortie (37) d'air étant placée dans l'élément de fond inférieur (2) de la sortie d'air (1"), de telle sorte que l'air frais se trouvant dans l'espace d'entrée d'air (6) (considéré dans la section transversale de la sortie d'air) puisse être dirigé hors de la sortie d'air de préférence en direction verticale vers le bas, sur une face inférieure de la sortie d'air,
**caractérisé en ce que** dans sa position de montage, dans laquelle elle est installée de manière fixe sous le plafond de la pièce (10) à aérer, la sortie d'air (1) dispose d'au moins un réceptacle (19) non équipé, qui est adapté pour recevoir au moins un module d'échangeur thermique (21).

2. Ensemble selon la revendication 1, **caractérisé en ce que** le réceptacle (19) non équipé est placé dans l'espace de sortie (11) d'air.

3. Ensemble selon la revendication 2, **caractérisé en ce que** l'air frais circulant à travers l'au moins une ouverture (13) de la paroi de séparation (12) dans l'espace de sortie (11) d'air peut être dirigé de sorte à passer à l'avant du réceptacle (19).

4. Ensemble selon l'une quelconque des revendications 1 à 3, **caractérisé en ce que** la première ouverture de sortie (9) d'air qui est placée dans l'espace de sortie (11) d'air est placée dans l'élément de fond inférieur (2) du boîtier (5), de telle sorte que de l'air se trouvant dans l'espace de sortie (11) d'air (considéré dans une section transversale verticale de la sortie d'air (1) puisse être dirigé hors de la sortie d'air (1) sur une face inférieure de la sortie d'air (1).

5. Ensemble selon l'une quelconque des revendications 1 à 4, **caractérisé en ce que** l'au moins une ouverture de sortie (8, 9, 37) d'air coopère avec un système d'orientation (30, 31, 32) à l'aide duquel une direction de reflux de l'air frais dirigé hors de la sortie d'air (1) est réglable.

6. Ensemble selon l'une quelconque des revendications 1 à 5, **caractérisé en ce que** l'au moins une ouverture (13) dans la paroi de séparation (12) est formée par une buse, la buse pouvant être bloquée de préférence à l'aide d'un système de blocage, de telle sorte qu'une submersion de l'air frais sortant de l'espace d'entrée (6) d'air dans l'espace de sortie (11) d'air soit empêchée.

7. Ensemble selon l'une quelconque des revendications 1 à 6, **caractérisé en ce que** le boîtier (5) comprend au moins un module d'éclairage (14), qui est placé de préférence dans l'espace intérieur du boîtier (5) et qui est relié avec l'élément de fond inférieur (2) ou avec un élément latéral (4, 4') du boîtier (5), de préférence par ailleurs, le boîtier (5) présentant une largeur d'au moins 1,30 m, de préférence de 1,40 m.

8. Ensemble selon l'une quelconque des revendications 1 à 7, **caractérisé par** un système de réglage (16) à l'aide duquel un débit volumétrique de l'air frais circulant à travers l'ouverture d'entrée d'air (7) dans l'espace d'entrée d'air (6) est réglable, le système de réglage (16) comprenant de préférence un clapet de réglage (17), ainsi qu'un système d'entraînement (18), à l'aide du clapet de réglage (17) qui est réglable à l'aide du système d'entraînement (18), de préférence une section transversale de circulation libre d'un canal d'arrivée (34) d'air relié avec l'ouverture d'entrée (7) d'air étant réglable, de préférence en continu entre une position ouverte dans laquelle la section transversale de circulation est complètement libérée et une position fermée dans laquelle la section transversale de circulation est complètement bloquée.

9. Ensemble selon la revendication 8, **caractérisé en ce que** le système de réglage (16) est placé dans l'espace intérieur du boîtier (5), le canal d'arrivée (34) d'air s'étendant de préférence à partir de l'ouverture d'entrée (7) d'air en direction de l'espace intérieur du boîtier (5).

10. Ensemble selon l'une quelconque des revendications 1 à 9, **caractérisé par** une forme allongée, la sortie d'air présentant une longueur d'au mois 5,0 m, de préférence d'au moins 5,5 m, de manière plus préférée d'au moins 6,0 m, de manière préférée par ailleurs, une pluralité d'ouvertures (13) étant placées dans la paroi de séparation (12), en étant distribuées sur la longueur de la sortie d'air (1), les ouvertures (13) pouvant être bloquées chaque fois individuellement à l'aide d'un système de blocage respectif, un écart mesuré dans la direction longitudinale de la sortie d'air entre deux ouvertures (13) voisines étant de préférence d'un maximum de 0,5 m, de manière plus préférée d'un maximum de 0,3 m.

11. Ensemble selon l'une quelconque des revendications 1 à 10, **caractérisé par** au moins une couche d'insonorisation (15) qui est placée de préférence en nappe sur l'élément de fond supérieur (3) et/ou sur l'élément de fond inférieur (2) et/ou sur l'au moins un élément latéral (4, 4') du boîtier (5).
